# EUROPEAN PATENT APPLICATION

(11) **EP 4 590 055 A1**
(43) Date of publication of application: **23.07.2025**
(21) Application number: 23880098.1
(22) Date of filing: 10.10.2023
(51) Int. Cl.: H04W 72/563, H04W 8/00, H04W 8/24, H04W 4/08, H04L 67/104, H04W 4/80, H04W 76/14, H04W 84/12

(54) **ELECTRONIC DEVICE AND OPERATION METHOD FOR SELECTING CHANNEL BETWEEN ELECTRONIC DEVICE AND EXTERNAL ELECTRONIC DEVICE ON BASIS OF PERFORMANCE INFORMATION ABOUT EXTERNAL ELECTRONIC DEVICE**

(30) Priority: 20.10.2022 KR 20220135385; 16.12.2022 KR 20220176773
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR); JANG, Wonjun, Suwon-si, Gyeonggi-do 16677 (KR)
(74) Representative: HGF
(86) International application number: PCT/KR2023/015534
(87) International publication number: WO 2024/085519

(57) **Abstract**

According to an electronic device and an operation method of the electronic device according to various embodiments, the electronic device may comprise first communication circuitry that transmits data to and/or receives data from an extemal electronic device through the first short-range wireless communication. The electronic device may include second communication circuitry that supports the simultaneous transmission and reception of signals in different frequency bands in second short-range wireless communication. The electronic device may include a processor operatively connected to the first communication circuitry and/or the second communication circuitry. The processor may discover the external electronic device through the first short-range wireless communication. The processor may receive, from the external electronic device, performance information of the external electronic device related to whether the simultaneous transmission and reception of the signals in different bands is supported. The processor may select, on the basis of the performance information of the external electronic device, a frequency band and/or channel to be used for connection with the external electronic device through the second short-range wireless communication. The processor may transmit information indicating the selected frequency band and/or channel to the external electronic device through the first short-range wireless communication. The processor may be configured to connect to the external electronic device through the selected frequency band and/or channel. Various other embodiments are possible.

## Description

### [Technical Field]

Various embodiments of the present invention relate to an electronic device and a method of operating the electronic device, and to a technique for selecting a channel between the electronic device and an external electronic device on the basis of performance information of the external electronic device.

### [Background Art]

With the spread of various electronic devices, the speed of wireless communication that can be used by various electronic devices has been improved. Among the wireless communications supported by recent electronic devices, IEEE 802.11 WLAN (or, Wi-Fi) is a standard for implementing high-speed wireless connections on various electronic devices. The first implemented Wi-Fi could support a transmission speed of up to 1 to 9 Mbps, but Wi-Fi 6 technology (or, IEEE 802.11 ax) can support transmission speeds of up to about 10 Gbps.

The electronic device may support various services utilizing relatively large amounts of data (e.g., UHD quality video streaming services, augmented reality (AR) services, virtual reality (VR) services, or mixed reality (MR) services) through wireless communications supporting high transmission rates, and may support various other services.

The IEEE 802.11 WLAN standard defines a technology that supports data transmission and reception through the P2P (peer to peer) method. The technology called Wi-Fi P2P may be a technology that supports data transmission and/or reception of electronic devices without going through an AP.

At least one electronic device may be connected to each other through Wi-Fi P2P technology, and multiple electronic devices may transmit and/or receive data using one electronic device as a medium. The electronic device that serves as a medium may be defined as a GO (group owner), and other electronic devices may be defined as GC (group client).

### [Disclosure of Invention]

### [Technical Problem]

The electronic device may utilize the first short-range wireless communication (e.g., Bluetooth) to discover an external electronic device to be connected to through the second short-range wireless communication (e.g., Wi-Fi). As part of the process of connecting to the discovered external electronic device, the electronic device may perform GO (group owner) negotiation and select a channel to be established between the electronic device and the external electronic device on the basis of data exchanged during the negotiation process.

The electronic device may continuously perform a discovery of an external electronic device through the first short-range wireless communication while performing a GO negotiation through the second short-range wireless communication. In the case that a frequency band (e.g., 2.4 GHz) used to perform the discovery of the external electronic device through the first short-range wireless communication overlaps with a frequency band (e.g., 2.4 GHz) used to perform the GO negotiation through the second short-range wireless communication, the discovery operation of the external electronic device through the first short-range wireless communication and the GO negotiation operation through the second short-range wireless communication may interfere with each other. In the case that the discovery operation of the external electronic device through the first short-range wireless communication and the GO negotiation operation through the second short-range wireless communication interfere with each other, the delay time of data transmission and/or reception through the second short-range wireless communication may increase as the time required for the GO negotiation increases.

### [Solution to Problem]

An electronic device according to an embodiment may include first communication circuitry that transmits data to and/or receives data from an external electronic device through the first short-range wireless communication. The electronic device may include second communication circuitry that supports the simultaneous transmission and reception of signals in different frequency bands in second short-range wireless communication. The electronic device may include a processor operatively connected to the first communication circuitry and/or the second communication circuitry. The processor may discover the external electronic device through the first short-range wireless communication. The processor may receive, from the external electronic device, performance information of the external electronic device related to whether the simultaneous transmission and reception of the signals in different bands is supported. The processor may select, on the basis of the performance information of the external electronic device, a frequency band and/or channel to be used for connection with the external electronic device through the second short-range wireless communication. The processor may transmit information indicating the selected frequency band and/or channel to the external electronic device through the first short-range wireless communication. The processor may be configured to connect to the external electronic device through the selected frequency band and/or channel.

A method of operating an electronic device according to an embodiment may include discovering an external electronic device through the first short-range wireless communication. A method of operating an electronic device may include receiving, from an external electronic device, performance information of the external electronic device related to whether the simultaneous transmission and reception of the signals in different bands is supported. The operation method of the electronic device may include selecting, on the basis of the performance information of the external electronic device, a frequency band and/or channel to be used for connection with the external electronic device through the second short-range wireless communication. A method of operating an electronic device may include transmitting information indicating the selected frequency band and/or channel to the external electronic device through the first short-range wireless communication. A method of operating an electronic device may include connecting with an external electronic device through the selected frequency band and/or channel.

An electronic device according to an embodiment may include first communication circuitry for transmitting and/or receiving data with an external electronic device through a first short-range wireless communication. The electronic device may include second communication circuitry supporting simultaneous transmission and reception of signals of different frequency bands of the second short-range wireless communication. The electronic device may include a processor operatively connected to the first communication circuitry and/or the second communication circuitry. The processor may receive a discovery signal transmitted by an external electronic device through the first short-range wireless communication. The processor may transmit performance information of the electronic device related to whether the electronic device supports simultaneous transmission and reception of signals of different frequency bands to the electronic device. The processor may receive, from the external electronic device, information indicating a frequency band and/or channel to be used for connection with the external electronic device through the second short-range wireless communication on the basis of performance information of the electronic device. The processor may be configured to connect with the external electronic device through the selected frequency band and/or channel.

### [Advantageous Effects of invention]

According to various embodiments of the present invention, an electronic device and an operation method of an electronic device may, in a process of connecting with an external electronic device discovered through a first short-range wireless communication through a second short-range wireless communication, may receive performance information of the external electronic device through the first short-range wireless communication, select a frequency band and/or channel to be used for connection with through the second short-range wireless communication on the basis of the performance information of the external electronic device, and activate an autonomous GO mode using the selected frequency band and/or channel. The selected frequency band and/or channel may be a frequency band and/or channel capable of avoiding 3-way channel concurrency between the electronic device and the external electronic device. Accordingly, the electronic device may be connected to the external electronic device through a frequency band and/or channel capable of exhibiting optimal performance without GO negotiation, thereby implementing improvement in communication performance. Furthermore, since the electronic device is connected to the external electronic device without GO negotiation, the delay time because of the GO negotiation process may be reduced.

### [Brief Description of Drawings]

FIG. 1 is a block diagram of an electronic device according to an embodiment.
FIG. 2 is a block diagram of a program according to an embodiment.
FIG. 3a is a block diagram of a first electronic device, a second electronic device, a first access point (AP), and/or a second AP according to an embodiment.
FIG. 3b is a diagram illustrating an operation of a first electronic device and a second electronic device performing negotiation to determine a GO (group owner) during an operation for connecting through the short-range wireless communication according to an embodiment.
FIG. 3c is a diagram illustrating an embodiment in which a first electronic device and a second electronic device receive a signal according to an embodiment.
FIG. 4 is a block diagram of a first electronic device according to an embodiment.
FIG. 5 is a block diagram of a second electronic device according to an embodiment.

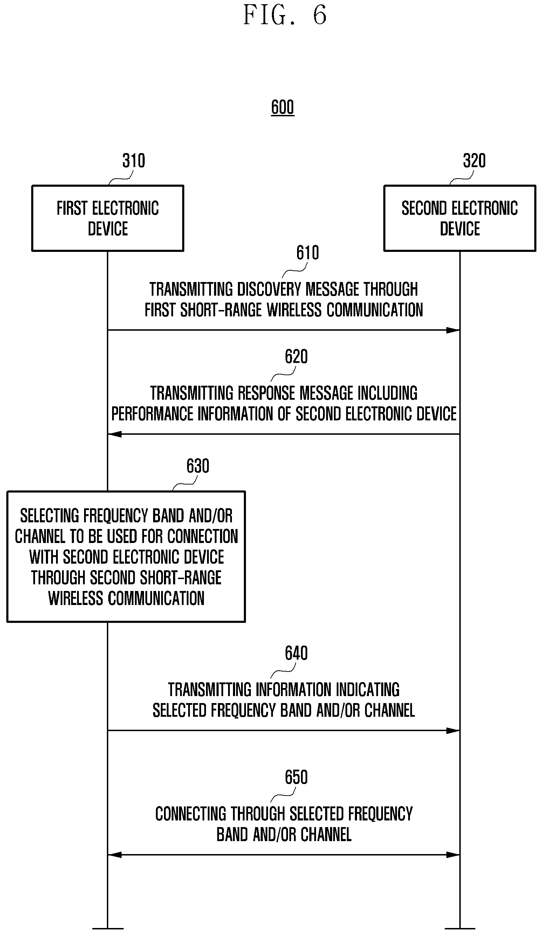

FIG. 6 is a diagram illustrating an embodiment in which a first electronic device and a second electronic device are connected through the second short-range wireless communication according to an embodiment.
FIGS. 7a and 7b are flowcharts illustrating operations of a first electronic device to select a channel to be connected to a second electronic device according to an embodiment.
FIG. 8 is a flowchart illustrating an operation method of an electronic device according to an embodiment.

### [Mode for the Invention]

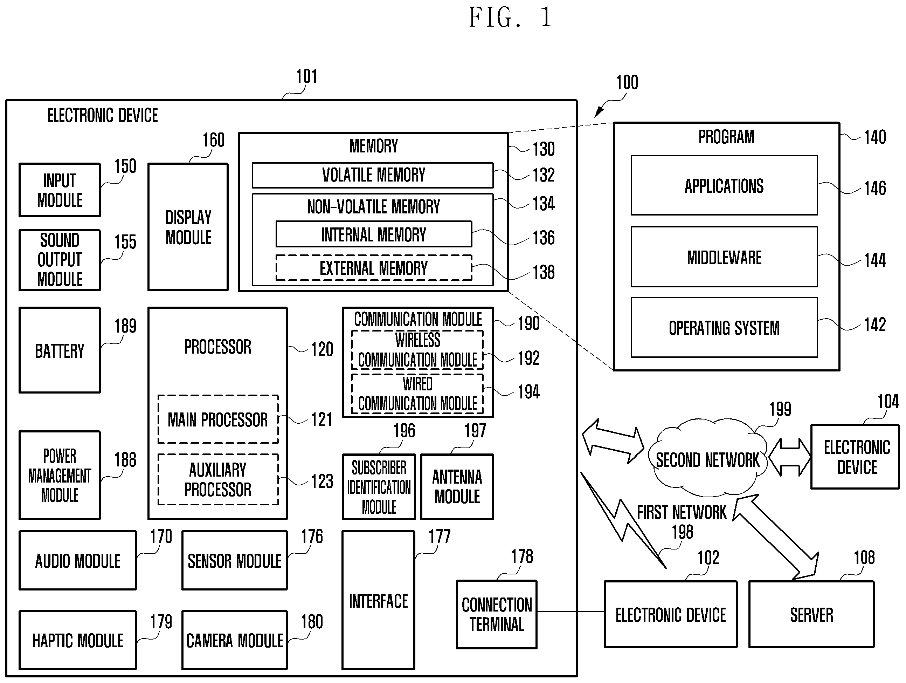

FIG. 1 is a block diagram illustrating an electronic device 101 in a network environment 100 according to various embodiments. With reference to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto . The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM , wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network) (WAN)). These various types of communication modules may be implemented as a single component (e.g., a single chip), or may be implemented as multi components (e.g., multi chips) separate from each other.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB , loss coverage (e.g., 164dB or less) for implementing mMTC , or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low -latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

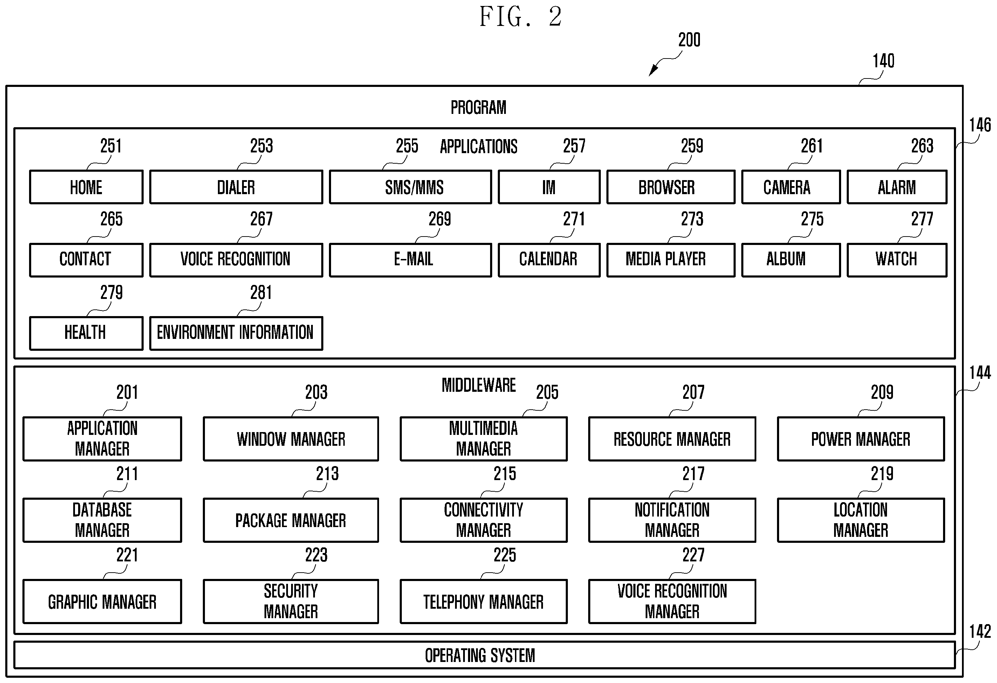

FIG. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM , iOSTM , WindowsTM , SymbianTM , TizenTM , or BadaTM . At least part of the program 140 , for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. T he OS 142, a optionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager. 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203 , for example, may manage one or more graphical user interface (GUI) resources that are used on a screen. The multimedia manager 205 , for example, may identify one or more formats to be used to play media files, and may encode or decode a corresponding one of the media files using a codec appropriate for a corresponding format selected from the one or more formats. The resource manager 207 , for example, may manage the source code of the application 146 or a memory space of the memory 130 .The power manager 209 , for example, may manage the capacity, temperature, or power of the battery 189, and determine or provide related information to be used for the operation of the electronic device 101 based at least in part on corresponding information of the capacity, temperature, or power of the battery 189 . According to an embodiment, the power manager 209 may interwork with a basic input/output system (BIOS) (not shown) of the electronic device 101.

The database manager 211 , for example, may generate, search, or change a database to be used by the application 146. The package manager 213 , for example, may manage installation or update of an application that is distributed in the form of a package file. The connectivity manager 215 , for example, may manage a wireless connection or a direct connection between the electronic device 101 and the external electronic device. The notification manager 217 , for example, may provide a function to notify a user of an occurrence of a specified event (e.g., an incoming call, message, or alert). The location manager 219 , for example, may manage locational information on the electronic device 101. The graphic manager 221 , for example, may manage one or more graphic effects to be offered to a user or a user interface related to the one or more graphic effects.

The security manager 223 , for example, may provide system security or user authentication. The telephony manager 225 , for example, may manage a voice call function or a video call function provided by the electronic device 101. The voice recognition manager 227 , for example, may transmit a user's voice data to the server 108, and receive , from the server 108 , a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, a provisionally or alternatively, may support installation, delete, or update of an application running on the external electronic device.

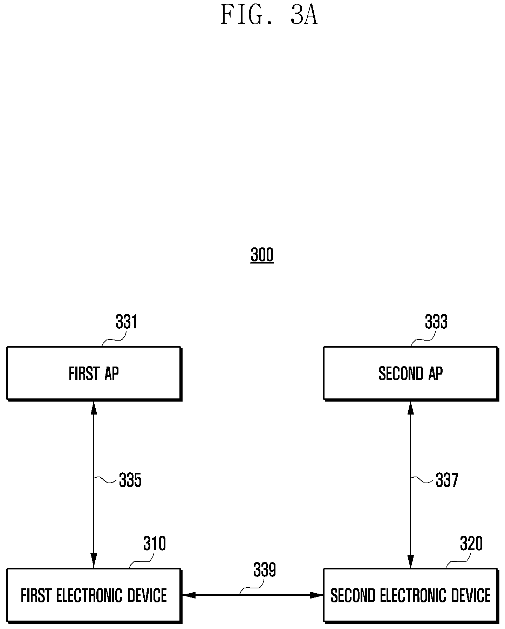

FIG. 3a is a block diagram of a first electronic device, a second electronic device, a first access point (AP), and/or a second AP according to an embodiment.

With reference to FIG. 3a, the wireless LAN system 300 may include a first electronic device 310 and/or a second electronic device 320. According to an embodiment, the first electronic device 310 may perform wireless communication with the first AP 331 through a short-range wireless communication. The short-range wireless communication may mean a communication method that both the first electronic device 310 and/or the first AP 331 can support. For example, the wireless communication may be Wi-Fi. The first AP 331 may serve as a base station that provides wireless communication to at least one electronic device (e.g., the first electronic device 310) located within a communication radius of the wireless LAN system 300. For example, the first AP 331 may include an AP (access point) of IEEE 802.11. The first electronic device 310 may include an STA (station) of IEEE 802.11.

The short-range wireless communication used by the first electronic device 310 and/or the first AP 331 to exchange data may utilize various frequency bands including a first frequency band (e.g., 2.4 GHz), a second frequency band (e.g., 5 GHz), and/or a third frequency band (e.g., 6 GHz). The first electronic device 310 and/or the first AP 331 may establish a channel included in one of the plurality of frequency bands and exchange data using the established channel.

According to an embodiment, the second electronic device 320 may perform wireless communication with the second AP 333 through a short-range wireless communication. The second AP 333 may serve as a base station that provides wireless communication to at least one electronic device (e.g., the second electronic device 320) located within the communication radius of the wireless LAN system 300. For example, the second AP 333 may include an AP (access point) of IEEE 802.11. The second electronic device 320 may include an STA (station) of IEEE 802.11.

The short-range wireless communication used by the second electronic device 320 and/or the second AP 333 to exchange data may utilize various frequency bands including a first frequency band (e.g., 2.4 GHz), a second frequency band (e.g., 5 GHz), and/or a third frequency band (e.g., 6 GHz). The second electronic device 320 and/or the second AP 333 may establish a channel included in one of the plurality of frequency bands and exchange data using the established channel.

The first electronic device 310 and the second electronic device 320 may be directly connected through the short-range wireless communication without going through separate entities (e.g., the first AP 331 and/or the second AP 333). The first electronic device 310 and the second electronic device 320 may be connected on the basis of the Wi-Fi direct standard defined by WFA (Wi-Fi alliance).

In order to be connected to each other through the short-range wireless communication, the first electronic device 310 and/or the second electronic device 320 may perform a discovery operation for discovering an electronic device to be connected, a provisioning discovery exchange operation, a group owner (GO) negotiation operation for determining which of the first electronic device 310 and/or the second electronic device 320 will be a host, and/or a provisioning operation.

A first channel 335 used for data exchange between a first AP 331 and a first electronic device 310, a second channel 337 used for data exchange between a second AP 333 and a second electronic device 320, and a third channel 339 used for data exchange between the first electronic device 310 and the second electronic device 320 may have different frequency bands (or different channel numbers).

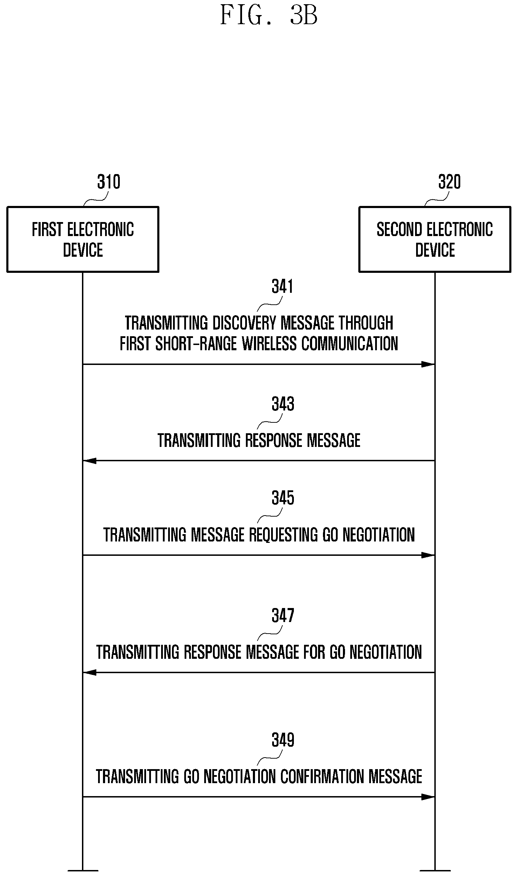

FIG. 3b is a diagram illustrating an operation of a first electronic device and a second electronic device performing negotiation to determine a GO (group owner) during an operation for connecting through the short-range wireless communication according to an embodiment.

FIG. 3b illustrates messages exchanged during negotiation to determine a GO performed while a first electronic device (e.g., the first electronic device 310 of FIG. 3a) and a second electronic device (e.g., the second electronic device 320 of FIG. 3b) are connected through the short-range wireless communication (e.g., Wi-Fi direct).

The first electronic device 310 may, in operation 341, transmit a discovery message to the second electronic device 320 through the first short-range wireless communication.

The discovery message may be a message for discovering an external electronic device (e.g., a second electronic device 320) that may be connected to the first electronic device 310. The discovery message may include identification information of an application (or service) running on the first electronic device 310, identification information of the first electronic device 310, and/or address information that may be used for connection with through the first short-range wireless communication of the first electronic device 310. The first short-range wireless communication may be various short-range wireless communications that the first electronic device 310 may support. According to an example, the first short-range wireless communication may be one of communication methods of Bluetooth, BLE (Bluetooth low energy), or UWB (ultra wide band).

The first electronic device 310 may transmit (or broadcast) a discovery message through the first short-range wireless communication to discover a second electronic device 320 to be connected through the second short-range wireless communication. The second short-range wireless communication may be a short-range wireless communication different from the first short-range wireless communication. **In** an example, the second short-range wireless communication may be Wi-Fi as defined in IEEE 802.11.

The second electronic device 320 may, in operation 343, transmit a response message to the discovery message to the first electronic device 310.

The response message may include identification information of an application (or service) running on the second electronic device 320, identification information of the second electronic device 320, and/or address information that may be used for connection with through the first short-range wireless communication of the second electronic device 320.

The first electronic device 310 may, in operation 345, transmit a GO negotiation request message to the second electronic device 320.

The first electronic device 310 may discover an external electronic device (e.g., the second electronic device 320) to be connected through the short-range wireless communication in a discovery procedure, and transmit a GO negotiation request message to the discovered second electronic device 320 through the second short-range wireless communication.

The GO negotiation request message may include P2P IE information and WSC IE (Wi-Fi simple configuration information element) information. The P2P IE information may include GO intent and operating channel attribute information that can be used to determine a GO. The operating channel attribute may include preferred channel information, which is information related to a channel preferred by the first electronic device 310 among channels that can be established between the first electronic device 310 and the second electronic device 320, and/or preferred frequency band information, which is information related to a frequency band preferred by the first electronic device 310. The preferred channel information may be included in a channel number field of the operating channel attribute field. The preferred frequency band information may be included in an operating class field of the operating channel attribute field.

The second electronic device 320 may, in operation 347, transmit a GO negotiation response message to the first electronic device 310 through the second short-range wireless communication.

The GO negotiation response message may include P2P IE information and WSC IE information. The P2P IE information may include GO intent and operating channel attribute information that may be used to determine a GO. The operating channel attribute may include preferred channel information, which is information related to a channel preferred by the second electronic device 320 among channels that may be established between the first electronic device 310 and the second electronic device 320, and/or preferred frequency band information, which is information related to a frequency band preferred by the second electronic device 320. The preferred channel information may be included in a channel number field of the operating channel attribute field. The preferred frequency band information may be included in an operating class field of the operating channel attribute field.

The first electronic device 310 may receive a GO negotiation response message and compare a GO intent included in the GO negotiation response message with a GO intent included in the GO negotiation request message. An electronic device that transmits a GO intent with a larger value may become a GO (group owner), and an electronic device that transmits a GO intent with a smaller value may become a GC (group client). The GO may operate as a host in a short-range wireless communication system, and the GC may operate as a client. In the present invention, for convenience of explanation, it is assumed that the first electronic device 310 performs the role of a GO.

The first electronic device 310 may select a channel to be used for connection between the first electronic device 310 and the second electronic device 320 on the basis of a preferred channel of the first electronic device 310, a preferred frequency band of the first electronic device 310, a preferred channel of the second electronic device 320, and/or a preferred frequency band of the second electronic device 320.

The first electronic device 310 may transmit a GO negotiation confirmation message to the second electronic device 320 through the second short-range wireless communication in operation 349.

The GO negotiation confirmation message may include information about the selected channel.

The first electronic device 310 may discover the second electronic device 320 through the second short-range wireless communication, or while performing GO negotiation through the second short-range wireless communication, the discovery of an external electronic device through the first short-range wireless communication may be continuously performed. In the case that a frequency band (e.g., 2.4 GHz) used to perform the discovery of the external electronic device through the first short-range wireless communication and a frequency band (e.g., 2.4 GHz) used to perform the discovery and/or GO negotiation of the second electronic device 320 through the second short-range wireless communication overlap with each other, the discovery operation of the external electronic device through the first short-range wireless communication and the GO negotiation operation through the second short-range wireless communication may interfere with each other.

The first electronic device 310 may avoid interference between a discovery operation of an external electronic device through the first short-range wireless communication and a GO negotiation operation through the second short-range wireless communication by generating a GO without a GO negotiation operation. However, the first electronic device 310 cannot identify the status of the second electronic device 320, and may select an arbitrary frequency band and/or channel and generate a group of the second short-range wireless communications using the selected frequency band and/or channel. In the case that the second electronic device 320 is included in the group of the second short-range wireless communications generated by the first electronic device 310 without a GO negotiation operation, the second electronic device 320 may not be able to smoothly transmit and/or receive data.

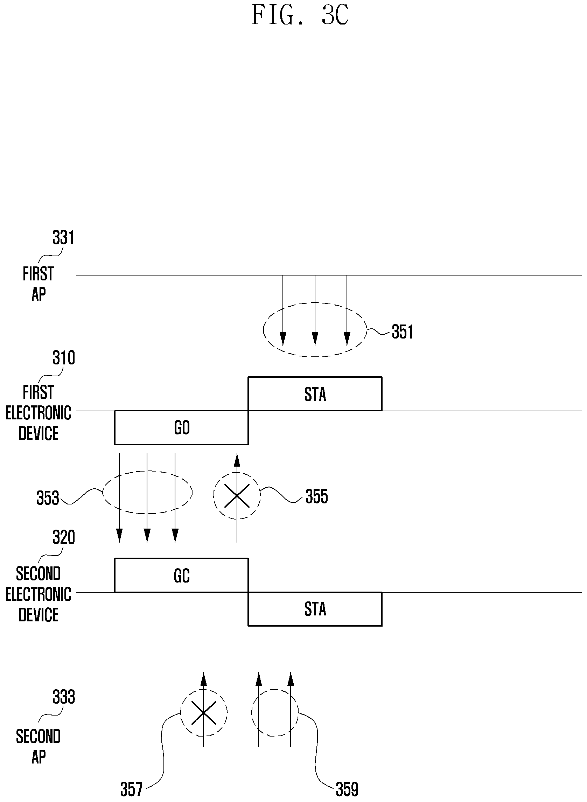

For example, a first channel 335 used for data exchange between a first AP 331 and a first electronic device 310, a second channel 337 used for data exchange between a second AP 333 and a second electronic device 320, and a third channel 339 used for data exchange between the first electronic device 310 and the second electronic device 320 may have different frequency bands (or different channel numbers). In the case that the first channel 335, the second channel 337, and the third channel 339 have different channel numbers (or frequency bands), a phenomenon in which a signal transmitted through each channel is not received may occur. Specific details are described later in FIG. 3c.

FIG. 3c is a diagram illustrating an embodiment in which a first electronic device and a second electronic device receive a signal according to various embodiments of the present invention.

A first electronic device (e.g., the first electronic device 310 of FIG. 3a) may operate as a GO (group owner) through GO negotiation with a second electronic device (e.g., the second electronic device 320 of FIG. 3a). The GO may be an entity performing an AP role of IEEE 802.11. The second electronic device 320 may operate as a GC (group client) through GO negotiation with the first electronic device 310. The GC may be an entity performing an STA role defined in IEEE 802.11.

In FIG. 3c, it is assumed that the first electronic device 310 activates the autonomous GO mode and performs data transmission and/or reception through an arbitrary channel (or frequency band). It is assumed that the second electronic device 320 is connected to the first electronic device 310 with the autonomous GO mode activated through the second short-range wireless communication.

The first electronic device 310 may broadcast a beacon 353 while operating as a GO. The beacon 353 may include information for data transmission between the first electronic device 310 and the second electronic device 320. The second electronic device 320 may receive the beacon and transmit and/or receive data to the first electronic device 310 on the basis of the information for data transmission included in the beacon.

The first electronic device 310 may operate as a GO and then switch to an STA for communication with the first AP 331. After switching to an STA, the first electronic device 310 may receive a beacon 351 transmitted by the first AP 331, and may transmit data to or receive data from the first AP 331 on the basis of information for data transmission between the first electronic device 310 and the first AP 331 included in the beacon 351.

In the case that the first channel 335 used for data exchange between the first AP 331 and the first electronic device 310 and the third channel 339 used for data exchange between the first electronic device 310 and the second electronic device 320 are in different frequency bands, the first electronic device 310 may be switched from a state of transmitting and/or receiving a signal of the frequency band corresponding to the third channel 339 to a state of transmitting and/or receiving a signal of the frequency band corresponding to the first channel 335. The first electronic device 310 may switch the operation mode of a communication circuit (e.g., the wireless communication module 190 of FIG. 1) supporting short-range wireless communication for transmission and/or reception of a signal of a different frequency band, and a situation may occur in which the signal 355 transmitted through the third channel 339 is not received while the operation mode of the communication circuit is switched.

The second electronic device 320 may receive a beacon 353 that the first electronic device 310 broadcasts while operating as a GC. The beacon 353 may include information for data transmission between the first electronic device 310 and the second electronic device 320. The second electronic device 320 may receive the beacon and transmit data to and/or receive data from the first electronic device 310 on the basis of the information for data transmission included in the beacon.

The second electronic device 320 may operate as a GC and then switch to an STA for communication with the second AP 333. After switching to a GC, the second electronic device 320 may receive a beacon 359 transmitted by the second AP 333, and may transmit data to or receive data from the second AP 333 on the basis of information for data transmission between the second electronic device 320 and the second AP 333 included in the beacon 359.

**In** the case that the second channel 337 used for data exchange between the second AP 333 and the second electronic device 320 and the third channel 339 used for data exchange between the first electronic device 310 and the second electronic device 320 are in different frequency bands, the second electronic device 320 may be switched from a state of transmitting and/or receiving a signal of a frequency band corresponding to the third channel 339 to a state of transmitting and/or receiving a signal of a frequency band corresponding to the second channel 337. The second electronic device 320 may switch the operation mode of communication circuitry (e.g., the wireless communication module 190 of FIG. 1) that supports short-range wireless communication for transmission and/or reception of signals of different frequency bands, and while the operation mode of the communication circuitry is switched, a situation may occur in which a signal 357 transmitted through the second channel 337 is not received (e.g., 3-way channel concurrency).

In the following, an embodiment is described in which the first electronic device 310 selects a channel between a first electronic device 310 and a second electronic device 320 to avoid 3-way channel concurrency on the basis of performance information of a second electronic device 320 received through the first short-range wireless communication.

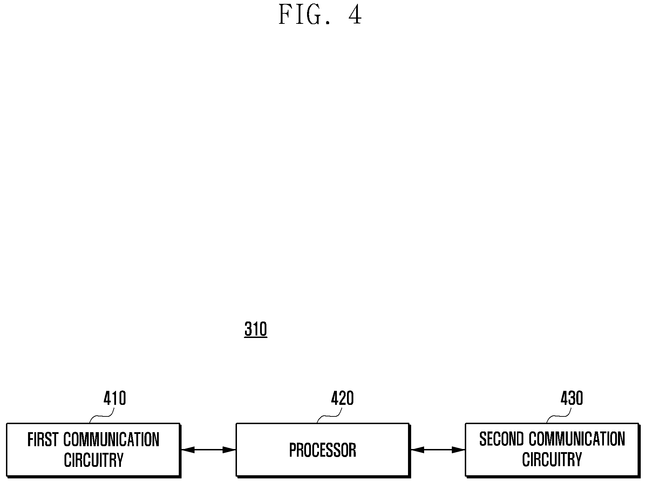

FIG. 4 is a block diagram of a first electronic device according to an embodiment.

According to an embodiment, a first electronic device (e.g., the first electronic device 310 of FIG. 3) may include first communication circuitry 410 (e.g., the wireless communication module 192 of FIG. 1), a processor 420 (e.g., the processor 120 of FIG. 1), and/or second communication circuitry 430 (e.g., the wireless communication module 192 of FIG. 1).

The first communication circuitry 410 may perform data transmission and/or reception through the first short-range wireless communication. The first short-range wireless communication may be various short-range wireless communications that the first electronic device 310 can support. According to an example, the first short-range wireless communication may be any one of Bluetooth, BLE (Bluetooth low energy), NFC (near field communication), short-range wireless communication using a QR code, or UWB (ultra wide band) communication methods. The first communication circuitry 410 may include various circuit structures used for modulation and/or demodulation of signals within the first electronic device 310. For example, the second communication circuitry 430 may modulate a baseband signal into an RF (radio frequency) band signal to be output through an antenna (not shown), or may demodulate an RF band signal received through an antenna into a baseband signal and transmit the same to the processor 420.

The second communication circuitry 430 may perform data transmission and/or reception through the second short-range wireless communication. The second short-range wireless communication may be a short-range wireless communication different from the first short-range wireless communication. According to an example, the second short-range wireless communication may be Wi-Fi defined in IEEE 802.11. The second communication circuitry 430 may include various circuit structures used for modulation and/or demodulation of signals within the first electronic device 310. For example, the second communication circuitry 430 may modulate a baseband signal into a signal of a radio frequency (RF) band to be output through an antenna (not shown), or may demodulate a signal of an RF band received through an antenna into a signal of a baseband and transmit the same to the processor 420.

The first communication circuitry 410 may perform the first short-range wireless communication through a first frequency band (e.g., 2.4 GHz). The second communication circuitry 430 may perform the second short-range wireless communication through a first frequency band (e.g., 2.4 GHz), a second frequency band (e.g., 5 GHz) that is a higher frequency band than the first frequency band, and/or a third frequency band (e.g., 6 GHz) that is a higher frequency band than the second frequency band.

The second communication circuitry 430 may be connected to the first AP (e.g., the first AP 331 of FIG. 3A) through one of a plurality of frequency bands including a first frequency band, a second frequency band, and/or a third frequency band, and may transmit data to the first AP 331 or receive data transmitted by the first AP 331.

The second communication circuitry 430 may be connected to an external electronic device (e.g., the second electronic device 320 of FIG. 3A) through one of a plurality of frequency bands including a first frequency band, a second frequency band, and/or a third frequency band, and may transmit data to the second electronic device 320 or receive data transmitted by the second electronic device 320.

The second communication circuitry 430 may support a function (e.g., real simultaneous dual band (RSDB) and/or dual band simultaneous (DBS)) that can simultaneously transmit and/or receive signals through at least two frequency bands among a plurality of frequency bands. For example, the second communication circuitry 430 may transmit and/or receive signals through a second frequency band while transmitting and/or receiving signals through a first frequency band. For another example, the second communication circuitry 430 may transmit and/or receive signals through a third frequency band while transmitting and/or receiving signals through a first frequency band. For another example, the second communication circuitry 430 may transmit and/or receive signals through a third frequency band while transmitting and/or receiving signals through a second frequency band. The processor 420 may store the simultaneous transmission and/or reception capability (e.g., whether simultaneous transmission and/or reception of signals of the first frequency band and the second frequency band is supported) of the second communication circuitry 430 in a memory (e.g., the memory 130 of FIG. 1).

The second communication circuitry 430 may perform an operation for receiving a signal transmitted by the second electronic device 320 on the basis of the control of the processor 420. The second communication circuitry 430 may receive a signal requesting transmission and/or reception of data through a specific channel from the processor 420 and control components (e.g., a low-noise amplifier, a switch, and/or a filter) of the second communication circuitry 430 so as to receive a signal through a frequency band corresponding to the specific channel.

The processor 420 may perform an operation of receiving data transmitted by an application processor (e.g., the processor 120 of FIG. 1) and generating a packet for transmitting the received data to the second electronic device 320 through the first communication circuitry 410 and/or the second communication circuitry 430. The processor 420 may be defined as a communication processor (or communication processors) included in a communication module (e.g., the wireless communication module 192 of FIG. 1). According to an embodiment, the processor 420 may perform channel coding on the basis of the data transmitted by the application processor 120, thereby generating a packet, identifying whether at least a portion of the data transmitted by the second electronic device 320 has an error, or performing an operation of recovering an error in the case that an error occurs (e.g., HARQ (hybrid auto repeat request)).

The processor 420 may be operatively connected to the first communication circuitry 410 and/or the second communication circuitry 430 and may control the operation of the first communication circuitry 410 and/or the second communication circuitry 430.

The processor 420 may execute an application installed on the memory (e.g., memory 130 of FIG. 1) of the first electronic device 310. The executed application may be an application that performs a specific service (e.g., content sharing and/or data transmission) through the short-range wireless communication. The processor 420 may discover (e.g., P2P discovery) a second electronic device 320 to be connected to the first electronic device 310 through the second short-range wireless communication, depending on the execution of the application.

The processor 420, in the process of discovering the second electronic device 320, may transmit (or broadcast) a discovery message through the first short-range wireless communication. The discovery message may include identification information of an application (or service) running on the first electronic device 310, identification information of the first electronic device 310, and/or address information that may be used for connection with the first electronic device 310 through the first short-range wireless communication. The processor 420 may control the first communication circuitry 410 to transmit (or broadcast) the discovery message.

The second electronic device 320 that receives the discovery message may transmit a response message to the discovery message to the first electronic device 310. The response message may include the device name of the second electronic device 320 and identification information of the application running on the second electronic device 320.

The response message may include performance information of the second electronic device 320 related to whether the second electronic device 320 supports simultaneous transmission and/or reception of signals in different frequency bands (e.g., a first frequency band, a second frequency band, and/or a third frequency band). The second electronic device 320 may also support a function (e.g., real simultaneous dual band (RSDB) and/or dual band simultaneous (DBS)) to simultaneously perform transmission and/or reception of signals through at least two frequency bands among a plurality of frequency bands. For example, the second electronic device 320 may perform transmission and/or reception of signals through a second frequency band while performing transmission and/or reception of signals through a first frequency band. For another example, the second electronic device 320 may perform transmission and/or reception of a signal through a third frequency band while performing transmission and/or reception of a signal through a first frequency band. For another example, the second electronic device 320 may perform transmission and/or reception of a signal through a third frequency band while performing transmission and/or reception of a signal through a second frequency band.

The performance information of the second electronic device 320 related to whether the second electronic device 320 supports simultaneous transmission and/or reception of signals of different frequency bands may include information indicating whether the second electronic device 320 supports simultaneous transmission and reception of different frequency bands and/or information indicating a frequency band that supports simultaneous transmission and reception.

According to an example, in the case that the second electronic device 320 supports simultaneous transmission and reception of different frequency bands, the performance information of the second electronic device 320 related to whether the second electronic device 320 supports simultaneous transmission and/or reception of signals of different frequency bands may include information indicating that the second electronic device 320 supports simultaneous transmission and reception of different frequency bands, and the performance information of the second electronic device 320 may include information of frequency bands (e.g., a first frequency band and a second frequency band) on which the second electronic device 320 supports simultaneous transmission and reception.

According to an example, in the case that the second electronic device 320 does not support simultaneous transmission and reception of different frequency bands, the performance information of the second electronic device 320 related to whether the second electronic device 320 supports simultaneous transmission and/or reception of signals of different frequency bands may include information indicating that the second electronic device 320 does not support simultaneous transmission and reception of different frequency bands.

The performance information of the second electronic device 320 related to whether the second electronic device 320 supports simultaneous transmission and/or reception of signals of different frequency bands may include information indicating whether the second electronic device 320 is connected to an external electronic device (e.g., the second AP 333 of FIG. 3a) and, in the case that the second electronic device 320 is connected to (e.g., the second AP 333 of FIG. 3a), a channel and/or frequency band between the second electronic device 320 and the external electronic device (e.g., the second AP 333 of FIG. 3a).

The processor 420 may identify performance information of the second electronic device 320 related to whether the second electronic device 320 supports simultaneous transmission and/or reception of signals of different frequency bands (e.g., a first frequency band, a second frequency band, and/or a third frequency band) , and select (or determine) a frequency band and/or channel to be connected through the second short-range wireless communication with the second electronic device 320 on the basis of the performance information of the second communication circuitry 430 related to whether the second electronic device 320 supports simultaneous transmission and/or reception of signals of different frequency bands and the performance information of the second electronic device 320 related to whether the second electronic device 320 supports simultaneous transmission and/or reception of signals of different frequency bands (e.g., a first frequency band, a second frequency band, and/or a third frequency band). The processor 420 may select (or determine) a frequency band and/or channel to be connected through the second short-range wireless communication with the second electronic device 320 to avoid 3-way channel concurrency.

Alternatively, the processor 420 may select (or determine) a frequency band and/or channel to be connected through the second short-range wireless communication with the second electronic device 320 on the basis of performance information of the second communication circuitry 430 related to whether the second communication circuitry 430 supports simultaneous transmission and/or reception of signals of different frequency bands and/or channel information between the first electronic device 310 and the first AP 331, in the case that the first electronic device 310 is connected to another external electronic device (e.g., the first AP 331 of FIG. 3A) through the second short-range wireless communication. The processor 420 may select (or determine) a frequency band and/or channel to be connected through the second short-range wireless communication with the second electronic device 320 to avoid 3-way channel concurrency.

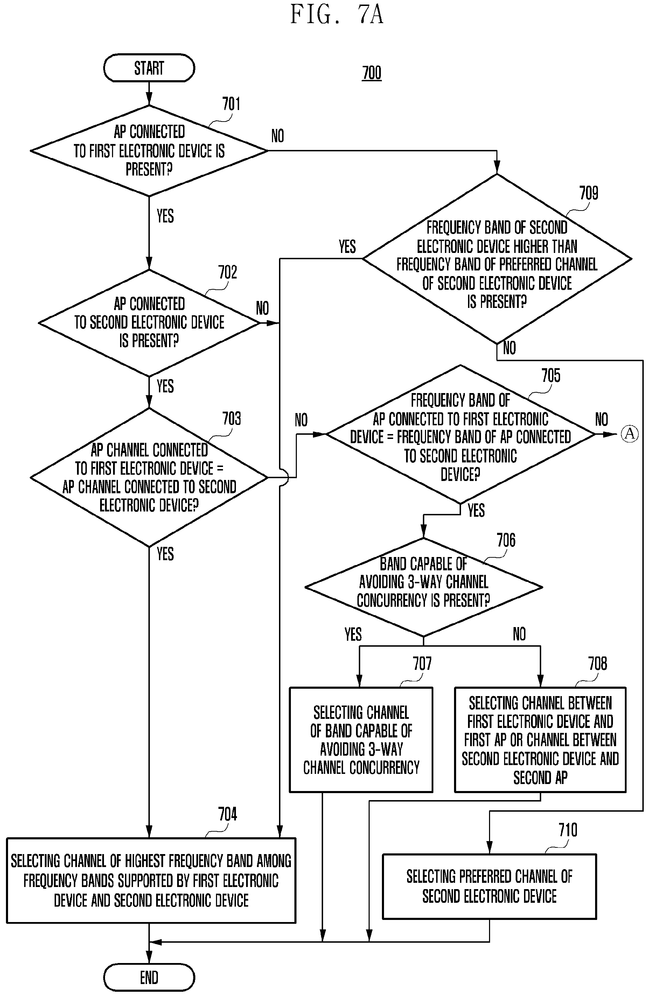

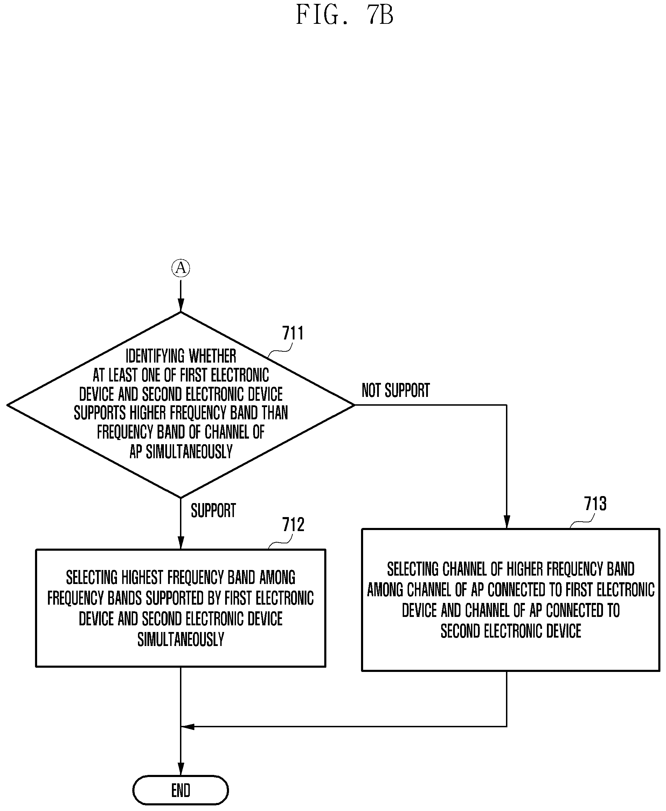

A specific example of selecting a frequency band and/or channel to be connected through the second short-range wireless communication with the second electronic device 320 on the basis of performance information of the second communication circuitry 430 (or, the first electronic device 310) and performance information of the second electronic device 320 related to whether the second communication circuitry 430 supports simultaneous transmission and/or reception of signals of different frequency bands (e.g., the first frequency band, the second frequency band, and/or the third frequency band) is described below with reference to FIGS. 7A and 7B.

The processor 420 may transmit information indicating the selected frequency band and/or channel to the second electronic device 320 through the first communication circuitry 410 and/or the second communication circuitry 430. In an example, the processor 420 may control the first communication circuitry 410 to transmit the information indicating the selected frequency band and/or channel through the first short-range wireless communication. In another example, the processor 420 may control the second communication circuitry 430 to transmit the information indicating the selected frequency band and/or channel through the second short-range wireless communication.

The processor 420 may activate the autonomous GO mode before transmitting the information indicating the selected frequency band and/or channel, during transmitting the information indicating the selected frequency band and/or channel, and/or after transmitting the information indicating the selected frequency band and/or channel. The autonomous GO mode is a mode in which data transmission and/or reception is performed through a direct connection between devices (e.g., the first electronic device 310 and the second electronic device 320) without going through an AP, and may be a mode in which data transmission and/or reception is performed through a frequency band and/or channel configured by a GO (e.g., the first electronic device 310) without a negotiation process between the devices. The processor 420 may perform a connection with the second electronic device 320 through a second short-range wireless communication while the autonomous GO mode is activated. The processor 420 may transmit data to the second electronic device 320 through the selected frequency band and/or channel, or receive data transmitted by the second electronic device 320 through the selected frequency band and/or channel.

The frequency band and/or channel selected on the basis of the performance information of the second electronic device 320 may be a frequency band and/or channel that can avoid 3-way channel concurrency (or has relatively good communication performance). Accordingly, the first electronic device 310 may activate the autonomous GO mode and transmit and/or receive data through the selected frequency band and/or channel without performing a negotiation process defined in Wi-Fi direct with the second electronic device 320, thereby reducing the delay time because of performing the negotiation process defined in Wi-Fi direct.

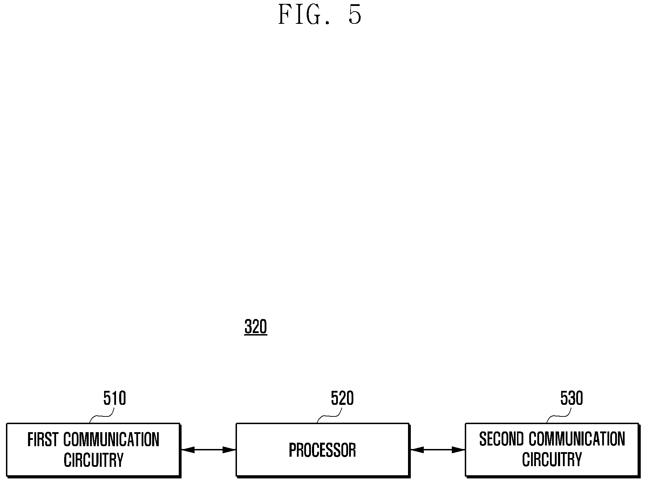

FIG. 5 is a block diagram of a second electronic device according to an embodiment.

According to an embodiment, a second electronic device (e.g., the second electronic device 320 of FIG. 3A) may include a first communication circuitry 510 (e.g., the wireless communication module 192 of FIG. 1), a processor 520 (e.g., the processor 120 of FIG. 1), and/or a second communication circuitry 530 (e.g., the wireless communication module 192 of FIG. 1).

The first communication circuitry 510 may perform data transmission and/or reception through the first short-range wireless communication. The first short-range wireless communication may be various short-range wireless communications that the first electronic device 310 can support. According to an example, the first short-range wireless communication may be any one of Bluetooth, BLE (Bluetooth low energy), NFC (near field communication), short-range wireless communication using a QR code, or UWB (ultra wide band) communication methods. The first communication circuitry 510 may include various circuit structures used for modulation and/or demodulation of signals within the first electronic device 310. For example, the second communication circuitry 530 may modulate a baseband signal into an RF (radio frequency) band signal to be output through an antenna (not shown), or may demodulate an RF band signal received through an antenna into a baseband signal and transmit the same to the processor 520.

The second communication circuitry 530 may perform data transmission and/or reception through the second short-range wireless communication. The second short-range wireless communication may be a short-range wireless communication different from the first short-range wireless communication. According to an example, the second short-range wireless communication may be Wi-Fi defined in IEEE 802.11. The second communication circuitry 530 may include various circuit structures used for modulation and/or demodulation of signals within the first electronic device 310. For example, the second communication circuitry 530 may modulate a baseband signal into a signal of a radio frequency (RF) band to be output through an antenna (not shown), or may demodulate a signal of an RF band received through an antenna into a signal of a baseband and transmit the same to the processor 520.

The first communication circuitry 510 may perform the first short-range wireless communication through a first frequency band (e.g., 2.4 GHz). The second communication circuitry 530 may perform the second short-range wireless communication through a first frequency band (e.g., 2.4 GHz), a second frequency band (e.g., 5 GHz) that is a higher frequency band than the first frequency band, and/or a third frequency band (e.g., 6 GHz) that is a higher frequency band than the second frequency band.

The second communication circuitry 530 may be connected to a second AP (e.g., the second AP 333 of FIG. 3a) through one of a plurality of frequency bands including a first frequency band, a second frequency band, and/or a third frequency band, and may transmit data to the second AP 333 or receive data transmitted by the second AP 333.

The second communication circuitry 530 may be connected to an external electronic device (e.g., the first electronic device 310 of FIG. 3a) through one of a plurality of frequency bands including a first frequency band, a second frequency band, and/or a third frequency band, and may transmit data to the first electronic device 310 or receive data transmitted by the first electronic device 310.

The second communication circuitry 530 may support a function (e.g., real simultaneous dual band (RSDB) and/or dual band simultaneous (DBS)) that can simultaneously perform transmission and/or reception of signals through at least two frequency bands among a plurality of frequency bands. For example, the second communication circuitry 530 may perform transmission and/or reception of signals through a second frequency band while performing transmission and/or reception of signals through a first frequency band. For another example, the second communication circuitry 530 may perform transmission and/or reception of signals through a third frequency band while performing transmission and/or reception of signals through a first frequency band. For another example, the second communication circuitry 530 may perform transmission and/or reception of signals through a third frequency band while performing transmission and/or reception of signals through a second frequency band. The processor 520 may store the simultaneous transmission and/or reception capability (e.g., whether simultaneous transmission and/or reception of signals of the first frequency band and the second frequency band is supported) of the second communication circuitry 530 in a memory (e.g., the memory 130 of FIG. 1).

The second communication circuitry 530 may perform an operation for receiving a signal transmitted by the second electronic device 320 on the basis of the control of the processor 520. The second communication circuitry 530 may receive a signal requesting transmission and/or reception of data through a specific channel from the processor 520 and control components of the second communication circuitry 530 (e.g., a low-noise amplifier, a switch, and/or a filter) to receive a signal through a frequency band corresponding to the specific channel.

The processor 520 may perform an operation of receiving data transmitted by an application processor (e.g., the processor 120 of FIG. 1) and generating a packet for transmitting the received data to the first electronic device 310. The processor 520 may be defined as a communication processor (or communication processors) included in a communication module (e.g., the wireless communication module 192 of FIG. 1). According to an embodiment, the processor 520 may perform channel coding on the basis of the data transmitted by the application processor 120, thereby generating a packet, identifying whether at least a portion of the data transmitted by the first electronic device 310 has an error, or performing an operation of recovering an error in the case that an error occurs (e.g., HARQ (hybrid auto repeat request)).

The processor 520 may be operatively connected to the first communication circuitry 510 and/or the second communication circuitry 530 to control the operation of the first communication circuitry 510 and/or the second communication circuitry 530.

The processor 520 may receive a discovery message transmitted by the first electronic device 310 through the first short-range wireless communication. The discovery message may include identification information of an application (or service) running on the first electronic device 310, identification information of the first electronic device 310, and/or address information that can be used for connection with the first electronic device 310 through the first short-range wireless communication. The processor 520 may transmit a response message to the discovery message to the first electronic device 310 through the first communication circuitry 510. The response message may include a device name of the second electronic device 320 and identification information of the application running on the second electronic device 320.

The response message may include performance information of the second electronic device 320 related to whether the second electronic device 320 supports simultaneous transmission and/or reception of signals in different frequency bands (e.g., a first frequency band, a second frequency band, and/or a third frequency band). The second electronic device 320 may also support a function (e.g., real simultaneous dual band (RSDB) and/or dual band simultaneous (DBS)) to simultaneously perform transmission and/or reception of signals through at least two frequency bands among the plurality of frequency bands. For example, the second electronic device 320 may perform transmission and/or reception of signals through the second frequency band while performing transmission and/or reception of signals through the first frequency band. For another example, the second electronic device 320 may perform transmission and/or reception of a signal through a third frequency band while performing transmission and/or reception of a signal through a first frequency band. For another example, the second electronic device 320 may perform transmission and/or reception of a signal through a third frequency band while performing transmission and/or reception of a signal through a second frequency band.

The performance information of the second electronic device 320 related to whether the second electronic device 320 supports simultaneous transmission and/or reception of signals of different frequency bands may include information indicating whether the second electronic device 320 supports simultaneous transmission and reception of different frequency bands and/or information indicating a frequency band that supports simultaneous transmission and reception.

According to an example, in the case that the second electronic device 320 supports simultaneous transmission and reception of different frequency bands, the performance information of the second electronic device 320 related to whether the second electronic device 320 supports simultaneous transmission and/or reception of signals of different frequency bands may include information indicating that the second electronic device 320 supports simultaneous transmission and reception of different frequency bands, and the performance information of the second electronic device 320 may include information of frequency bands (e.g., a first frequency band and a second frequency band) on which the second electronic device 320 supports simultaneous transmission and reception.

In an example, in the case that the second electronic device 320 does not support simultaneous transmission and reception of different frequency bands, the performance information of the second electronic device 320 related to whether the second electronic device 320 supports simultaneous transmission and/or reception of signals of different frequency bands may include information indicating that the second electronic device 320 does not support simultaneous transmission and reception of different frequency bands.

The performance information of the second electronic device 320 related to whether the second electronic device 320 supports simultaneous transmission and/or reception of signals of different frequency bands may include information indicating whether the second electronic device 320 is connected to an external electronic device (e.g., the second AP 333 of FIG. 3A) and, in the case that the second electronic device 320 is connected to the external electronic device (e.g., the second AP 333 of FIG. 3A), a channel and/or frequency band between the second electronic device 320 and the external electronic device (e.g., the second AP 333 of FIG. 3A).

As described above in FIG. 4, the first electronic device 310 may identify performance information of the second electronic device 320 related to whether the second electronic device 320 supports simultaneous transmission and/or reception of signals of different frequency bands (e.g., a first frequency band, a second frequency band, and/or a third frequency band), and select (or determine) a frequency band and/or channel to be connected through the second short-range wireless communication with the second electronic device 320 on the basis of the performance information of the first electronic device 310 related to whether the second electronic device 320 supports simultaneous transmission and/or reception of signals of different frequency bands and the performance information of the second electronic device 320 related to whether the second electronic device 320 supports simultaneous transmission and/or reception of signals of different frequency bands (e.g., a first frequency band, a second frequency band, and/or a third frequency band). The first electronic device 310 may select (or determine) a frequency band and/or channel to be connected through the second short-range wireless communication with the second electronic device 320 to avoid 3-way channel concurrency.

The first electronic device 310 may transmit information indicating the selected frequency band and/or channel to the second electronic device 320. According to an example, the first electronic device 310 may transmit the information indicating the selected frequency band and/or channel through the first short-range wireless communication and/or the second short-range wireless communication.

**In** the above, it is described that the first electronic device 310 selects (or determines) a frequency band and/or channel to be connected through the second short-range wireless communication with the second electronic device 320, but the second electronic device 320 may also select a frequency band and/or channel.

The processor 520 may receive a discovery message through the first short-range wireless communication. The discovery message may include performance information of the first electronic device 310 related to whether the first electronic device 310 supports simultaneous transmission and/or reception of signals in different frequency bands (e.g., a first frequency band, a second frequency band, and/or a third frequency band). The first electronic device 310 may also support a function (e.g., real simultaneous dual band (RSDB) and/or dual band simultaneous (DBS)) that can simultaneously perform transmission and/or reception of signals through at least two frequency bands among a plurality of frequency bands.

The processor 520 may select (or determine) a frequency band and/or channel to be connected through the second short-range wireless communication with the first electronic device 310 on the basis of performance information of the first electronic device 310, included in the discovery message, related to whether the first electronic device 310 supports simultaneous transmission and/or reception of signals in different frequency bands (e.g., a first frequency band, a second frequency band, and/or a third frequency band). The processor 520 may induce to perform the second short-range wireless communication through the frequency band and/or channel selected by the processor 520 by transmitting information indicating the frequency band and/or channel selected by the processor 520 to the first electronic device 310 through the first short-range wireless communication and/or the second short-range wireless communication, in the case that the frequency band and/or channel selected by the processor 520 is different from the frequency band and/or channel selected by the first electronic device 310.

The processor 520 may receive information indicating a selected frequency band and/or channel received from the first electronic device 310 and perform a series of operations to connect with the first electronic device 310 through the second short-range wireless communication.

The processor 520 may wait for reception of a signal transmitted through a selected frequency band and/or channel as part of a series of operations for connecting to the first electronic device 310 through the second short-range wireless communication. The processor 520 may receive a signal broadcasted (or transmitted) through the second short-range wireless communication from the first electronic device 310. The signal may include information of the first electronic device 310 related to the second short-range wireless communication. **In** an example, the signal may include identification information of the first electronic device 310 and address information of the first electronic device 310.

The processor 520 may identify whether the identification information of the first electronic device 310 included in the signal received through the second short-range wireless communication matches with the identification information of the first electronic device 310 included in the discovery message received through the first short-range wireless communication. The processor 520 may perform a connection with the first electronic device 310 through the second short-range wireless communication on the basis that the identification information of the first electronic device 310 included in the signal received through the second short-range wireless communication matches with the identification information of the first electronic device 310 included in the discovery message received through the first short-range wireless communication. The second electronic device 320 may transmit data to and/or receive data from the first electronic device 310 through the first short-range wireless communication as a GC (group client) of the group generated by the first electronic device 310. The second electronic device 320 may transmit data to and/or receive data from the first electronic device 310 through a channel and/or frequency band selected by the first electronic device 310.

FIG. 5 is a block diagram of a second electronic device according to an embodiment.

According to an embodiment, a second electronic device (e.g., the second electronic device 320 of FIG. 3a) may include a first communication circuit 510 (e.g., the wireless communication module 192 of FIG. 1), a processor 520 (e.g., the processor 120 of FIG. 1), and/or a second communication circuit 530 (e.g., the wireless communication module 192 of FIG. 1).

The first communication circuit 510 may perform data transmission and/or reception through the first short-range wireless communication. The first short-range wireless communication may be various short-range wireless communications that the first electronic device 310 can support. According to an example, the first short-range wireless communication may be any one of Bluetooth, BLE (Bluetooth low energy), NFC (near field communication), short-range wireless communication using a QR code, or UWB (ultra wide band) communication methods. The first communication circuit 510 may include various circuit structures used for modulation and/or demodulation of signals within the first electronic device 310. For example, the second communication circuit 530 may modulate a baseband signal into an RF (radio frequency) band signal to be output through an antenna (not shown), or may demodulate an RF band signal received through an antenna into a baseband signal and transmit the same to the processor 520.

The second communication circuit 530 may perform data transmission and/or reception through the second short-range wireless communication. The second short-range wireless communication may be a short-range wireless communication different from the first short-range wireless communication. According to an example, the second short-range wireless communication may be Wi-Fi defined in IEEE 802.11. The second communication circuit 530 may include various circuit structures used for modulation and/or demodulation of signals within the first electronic device 310. For example, the second communication circuit 530 may modulate a baseband signal into a signal of a radio frequency (RF) band to be output through an antenna (not shown), or may demodulate a signal of an RF band received through an antenna into a signal of a baseband and transmit the same to the processor 520.

The first communication circuit 510 may perform the first short-range wireless communication through a first frequency band (e.g., 2.4 GHz). The second communication circuit 530 may perform the second short-range wireless communication through a first frequency band (e.g., 2.4 GHz), a second frequency band (e.g., 5 GHz) that is a higher frequency band than the first frequency band, and/or a third frequency band (e.g., 6 GHz) that is a higher frequency band than the second frequency band.

The second communication circuit 530 may be connected to a second AP (e.g., the second AP 333 of FIG. 3a) through one of a plurality of frequency bands including a first frequency band, a second frequency band, and/or a third frequency band, and may transmit data to the second AP 333 or receive data transmitted by the second AP 333.

The second communication circuit 530 may be connected to an external electronic device (e.g., the first electronic device 310 of FIG. 3a) through one of a plurality of frequency bands including a first frequency band, a second frequency band, and/or a third frequency band, and may transmit data to the first electronic device 310 or receive data transmitted by the first electronic device 310.

The second communication circuit 530 may support a function (e.g., real simultaneous dual band (RSDB) and/or dual band simultaneous (DBS)) that can simultaneously perform transmission and/or reception of signals through at least two frequency bands among a plurality of frequency bands. For example, the second communication circuit 530 may perform transmission and/or reception of signals through a second frequency band while performing transmission and/or reception of signals through a first frequency band. For another example, the second communication circuit 530 may perform transmission and/or reception of signals through a third frequency band while performing transmission and/or reception of signals through a first frequency band. For another example, the second communication circuit 530 may perform transmission and/or reception of signals through a third frequency band while performing transmission and/or reception of signals through a second frequency band. The processor 520 may store the simultaneous transmission and/or reception capability (e.g., whether simultaneous transmission and/or reception of signals of the first frequency band and the second frequency band is supported) of the second communication circuit 530 in a memory (e.g., the memory 130 of FIG. 1).

The second communication circuit 530 may perform an operation for receiving a signal transmitted by the second electronic device 320 on the basis of the control of the processor 520. The second communication circuit 530 may receive a signal requesting transmission and/or reception of data through a specific channel from the processor 520 and control components of the second communication circuit 530 (e.g., a low-noise amplifier, a switch, and/or a filter) to receive a signal through a frequency band corresponding to the specific channel.

The processor 520 may perform an operation of receiving data transmitted by an application processor (e.g., the processor 120 of FIG. 1) and generating a packet for transmitting the received data to the first electronic device 310. The processor 520 may be defined as a communication processor (or communication processors) included in a communication module (e.g., the wireless communication module 192 of FIG. 1). According to an embodiment, the processor 520 may perform channel coding on the basis of the data transmitted by the application processor 120, thereby generating a packet, identifying whether at least a portion of the data transmitted by the first electronic device 310 has an error, or performing an operation of recovering an error in the case that an error occurs (e.g., HARQ (hybrid auto repeat request)).

The processor 520 may be operatively connected to the first communication circuit 510 and/or the second communication circuit 530 to control the operation of the first communication circuit 510 and/or the second communication circuit 530.

The processor 520 may receive a discovery message transmitted by the first electronic device 310 through the first short-range wireless communication. The discovery message may include identification information of an application (or service) running on the first electronic device 310, identification information of the first electronic device 310, and/or address information that can be used for connection with the first electronic device 310 through the first short-range wireless communication. The processor 520 may transmit a response message to the discovery message to the first electronic device 310 through the first communication circuit 510. The response message may include a device name of the second electronic device 320 and identification information of the application running on the second electronic device 320.

The response message may include performance information of the second electronic device 320 related to whether the second electronic device 320 supports simultaneous transmission and/or reception of signals in different frequency bands (e.g., a first frequency band, a second frequency band, and/or a third frequency band). The second electronic device 320 may also support a function (e.g., real simultaneous dual band (RSDB) and/or dual band simultaneous (DBS)) to simultaneously perform transmission and/or reception of signals through at least two frequency bands among the plurality of frequency bands. For example, the second electronic device 320 may perform transmission and/or reception of signals through the second frequency band while performing transmission and/or reception of signals through the first frequency band. For another example, the second electronic device 320 may perform transmission and/or reception of a signal through a third frequency band while performing transmission and/or reception of a signal through a first frequency band. For another example, the second electronic device 320 may perform transmission and/or reception of a signal through a third frequency band while performing transmission and/or reception of a signal through a second frequency band.

The performance information of the second electronic device 320 related to whether the second electronic device 320 supports simultaneous transmission and/or reception of signals of different frequency bands may include information indicating whether the second electronic device 320 supports simultaneous transmission and reception of different frequency bands and/or information indicating a frequency band that supports simultaneous transmission and reception.

According to an example, in the case that the second electronic device 320 supports simultaneous transmission and reception of different frequency bands, the performance information of the second electronic device 320 related to whether the second electronic device 320 supports simultaneous transmission and/or reception of signals of different frequency bands may include information indicating that the second electronic device 320 supports simultaneous transmission and reception of different frequency bands, and the performance information of the second electronic device 320 may include information of frequency bands (e.g., a first frequency band and a second frequency band) on which the second electronic device 320 supports simultaneous transmission and reception.

In an example, in the case that the second electronic device 320 does not support simultaneous transmission and reception of different frequency bands, the performance information of the second electronic device 320 related to whether the second electronic device 320 supports simultaneous transmission and/or reception of signals of different frequency bands may include information indicating that the second electronic device 320 does not support simultaneous transmission and reception of different frequency bands.

The performance information of the second electronic device 320 related to whether the second electronic device 320 supports simultaneous transmission and/or reception of signals of different frequency bands may include information indicating whether the second electronic device 320 is connected to an extemal electronic device (e.g., the second AP 333 of FIG. 3a) and, in the case that the second electronic device 320 is connected to the extemal electronic device (e.g., the second AP 333 of FIG. 3a), a channel and/or frequency band between the second electronic device 320 and the external electronic device (e.g., the second AP 333 of FIG. 3a).

As described above in FIG. 4, the first electronic device 310 may identify performance information of the second electronic device 320 related to whether the second electronic device 320 supports simultaneous transmission and/or reception of signals of different frequency bands (e.g., a first frequency band, a second frequency band, and/or a third frequency band), and select (or determine) a frequency band and/or channel to be connected through the second short-range wireless communication with the second electronic device 320 on the basis of the performance information of the first electronic device 310 related to whether the second electronic device 320 supports simultaneous transmission and/or reception of signals of different frequency bands and the performance information of the second electronic device 320 related to whether the second electronic device 320 supports simultaneous transmission and/or reception of signals of different frequency bands (e.g., a first frequency band, a second frequency band, and/or a third frequency band). The first electronic device 310 may select (or determine) a frequency band and/or channel to be connected through the second short-range wireless communication with the second electronic device 320 to avoid 3-way channel concurrency.

The first electronic device 310 may transmit information indicating the selected frequency band and/or channel to the second electronic device 320. According to an example, the first electronic device 310 may transmit the information indicating the selected frequency band and/or channel through the first short-range wireless communication and/or the second short-range wireless communication.

**In** the above, it is described that the first electronic device 310 selects (or determines) a frequency band and/or channel to be connected through the second short-range wireless communication with the second electronic device 320, but the second electronic device 320 may also select a frequency band and/or channel.

The processor 520 may receive a discovery message through the first short-range wireless communication. The discovery message may include performance information of the first electronic device 310 related to whether the first electronic device 310 supports simultaneous transmission and/or reception of signals in different frequency bands (e.g., a first frequency band, a second frequency band, and/or a third frequency band). The first electronic device 310 may also support a function (e.g., real simultaneous dual band (RSDB) and/or dual band simultaneous (DBS)) that can simultaneously perform transmission and/or reception of signals through at least two frequency bands among a plurality of frequency bands.

The processor 520 may select (or determine) a frequency band and/or channel to be connected through the second short-range wireless communication with the first electronic device 310 on the basis of performance information of the first electronic device 310, included in the discovery message, related to whether the first electronic device 310 supports simultaneous transmission and/or reception of signals in different frequency bands (e.g., a first frequency band, a second frequency band, and/or a third frequency band). The processor 520 may induce to perform the second short-range wireless communication through the frequency band and/or channel selected by the processor 520 by transmitting information indicating the frequency band and/or channel selected by the processor 520 to the first electronic device 310 through the first short-range wireless communication and/or the second short-range wireless communication, in the case that the frequency band and/or channel selected by the processor 520 is different from the frequency band and/or channel selected by the first electronic device 310.

The processor 520 may receive information indicating a selected frequency band and/or channel received from the first electronic device 310 and perform a series of operations to connect with the first electronic device 310 through the second short-range wireless communication.

The processor 520 may wait for reception of a signal transmitted through a selected frequency band and/or channel as part of a series of operations for connecting to the first electronic device 310 through the second short-range wireless communication. The processor 520 may receive a signal broadcasted (or transmitted) through the second short-range wireless communication from the first electronic device 310. The signal may include information of the first electronic device 310 related to the second short-range wireless communication. **In** an example, the signal may include identification information of the first electronic device 310 and address information of the first electronic device 310.

The processor 520 may identify whether the identification information of the first electronic device 310 included in the signal received through the second short-range wireless communication matches with the identification information of the first electronic device 310 included in the discovery message received through the first short-range wireless communication. The processor 520 may perform a connection with the first electronic device 310 through the second short-range wireless communication on the basis that the identification information of the first electronic device 310 included in the signal received through the second short-range wireless communication matches with the identification information of the first electronic device 310 included in the discovery message received through the first short-range wireless communication. The second electronic device 320 may transmit data to and/or receive data from the first electronic device 310 through the first short-range wireless communication as a GC (group client) of the group generated by the first electronic device 310. The second electronic device 320 may transmit data to and/or receive data from the first electronic device 310 through a channel and/or frequency band selected by the first electronic device 310.

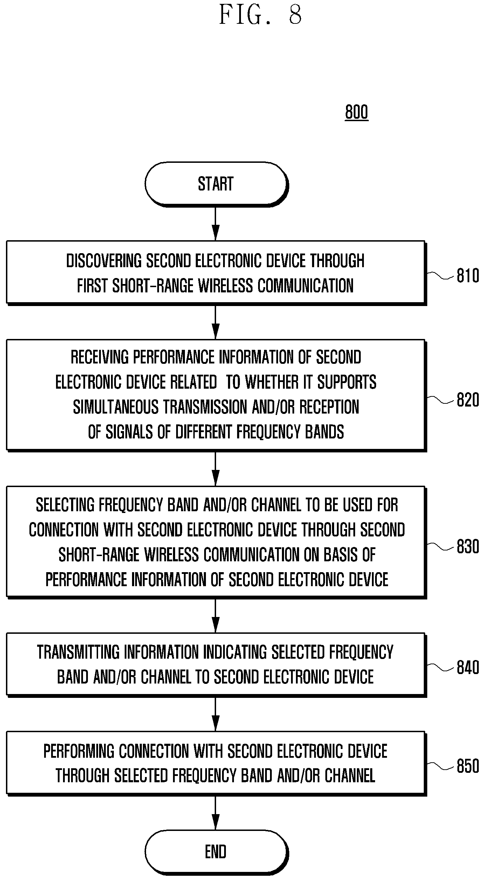

FIG. 8 is a flowchart illustrating an operation method of an electronic device according to an embodiment.

With reference to FIG. 8, a first electronic device (e.g., the first electronic device 310 of FIG. 4) may discover a second electronic device (e.g., the second electronic device 320 of FIG. 5) through the first short-range wireless communication in operation 810.

The first electronic device 310 may transmit a discovery message to the second electronic device 320 through the first short-range wireless communication.

The first electronic device 310 may execute an application installed on the memory of the first electronic device 310 (e.g., the memory 130 of FIG. 1). The executed application may be an application that performs a specific service (e.g., content sharing and/or data transmission) through the short-range wireless communication. The first electronic device 310 may discover (e.g., P2P discovery) a second electronic device 320 to be connected to the first electronic device 310 through the second short-range wireless communication, depending on the execution of the application.

The first electronic device 310, in the process of discovering the second electronic device 320, may transmit (or broadcast) a discovery message through the first short-range wireless communication. The discovery message may include identification information of an application (or service) running on the first electronic device 310, identification information of the first electronic device 310, and/or address information that may be used for connection with the first electronic device 310 through the first short-range wireless communication. The first electronic device 310 may control the first communication circuitry 410 to transmit (or broadcast) the discovery message.

The first electronic device 310, in operation 820, may receive performance information of the second electronic device 320 related to whether it supports simultaneous transmission and/or reception of signals of different frequency bands.

The second electronic device 320 that receives a discovery message from a first electronic device 310 may transmit a response message to the discovery message to the first electronic device 310. The response message may include a device name of the second electronic device 320 and identification information of an application running on the second electronic device 320.

The response message may include performance information of the second electronic device 320 related to whether the second electronic device 320 supports simultaneous transmission and/or reception of signals in different frequency bands (e.g., a first frequency band, a second frequency band, and/or a third frequency band). The second electronic device 320 may also support a function (e.g., real simultaneous dual band (RSDB) and/or dual band simultaneous (DBS)) to simultaneously perform transmission and/or reception of signals through at least two frequency bands among the plurality of frequency bands. For example, the second electronic device 320 may perform transmission and/or reception of signals through the second frequency band while performing transmission and/or reception of signals through the first frequency band. For another example, the second electronic device 320 may perform transmission and/or reception of a signal through a third frequency band while performing transmission and/or reception of a signal through a first frequency band. For another example, the second electronic device 320 may perform transmission and/or reception of a signal through a third frequency band while performing transmission and/or reception of a signal through a second frequency band.

The performance information of the second electronic device 320 related to whether the second electronic device 320 supports simultaneous transmission and/or reception of signals of different frequency bands may include information indicating whether the second electronic device 320 supports simultaneous transmission and reception of different frequency bands and/or information indicating a frequency band that supports simultaneous transmission and reception.

According to an example, in the case that the second electronic device 320 supports simultaneous transmission and reception of different frequency bands, the performance information of the second electronic device 320 related to whether the second electronic device 320 supports simultaneous transmission and/or reception of signals of different frequency bands may include information indicating that the second electronic device 320 supports simultaneous transmission and reception of different frequency bands, and the performance information of the second electronic device 320 may include information of frequency bands (e.g., a first frequency band and a second frequency band) on which the second electronic device 320 supports simultaneous transmission and reception.

In an example, in the case that the second electronic device 320 does not support simultaneous transmission and reception of different frequency bands, the performance information of the second electronic device 320 related to whether the second electronic device 320 supports simultaneous transmission and/or reception of signals of different frequency bands may include information indicating that the second electronic device 320 does not support simultaneous transmission and reception of different frequency bands.

The performance information of the second electronic device 320 related to whether the second electronic device 320 supports simultaneous transmission and/or reception of signals of different frequency bands may include information indicating whether the second electronic device 320 is connected to an extemal electronic device (e.g., the second AP 333 of FIG. 3a) and, in the case that the second electronic device 320 is connected to the extemal electronic device (e.g., the second AP 333 of FIG. 3a), a channel and/or frequency band between the second electronic device 320 and the external electronic device (e.g., the second AP 333 of FIG. 3a).

The first electronic device 310 may, in operation 830, select a frequency band and/or channel to be used for connection with the second electronic device 320 through the second short-range wireless communication on the basis of performance information of the second electronic device 320.

The first electronic device 310 may identify performance information of the second electronic device 320 related to whether the second electronic device 320 supports simultaneous transmission and/or reception of signals of different frequency bands (e.g., a first frequency band, a second frequency band, and/or a third frequency band), and select (or determine) a frequency band and/or channel to be connected through the second short-range wireless communication with the second electronic device 320 on the basis of the performance information of the second communication circuitry 430 related to whether the second electronic device 320 supports simultaneous transmission and/or reception of signals of different frequency bands and the performance information of the second electronic device 320 related to whether the second electronic device 320 supports simultaneous transmission and/or reception of signals of different frequency bands (e.g., the first frequency band, the second frequency band, and/or the third frequency band). The first electronic device 310 may select (or determine) a frequency band and/or channel to be connected through the second short-range wireless communication with the second electronic device 320 to avoid 3-way channel concurrency.

Alternatively, the first electronic device 310 may select (or determine) a frequency band and/or channel to be connected with the second electronic device 320 through the second short-range wireless communication on the basis of performance information of the second communication circuitry 430 related to whether the second communication circuitry 430 supports simultaneous transmission and/or reception of signals of different frequency bands and/or channel information between the first electronic device 310 and the first AP 331, in the case that the first electronic device 310 is connected with another external electronic device (e.g., the first AP 331 of FIG. 3A) through the second short-range wireless communication. The first electronic device 310 may select (or determine) a frequency band and/or channel to be connected with the second electronic device 320 through the second short-range wireless communication to avoid 3-way channel concurrency.

The frequency band and/or channel selected on the basis of the performance information of the second electronic device 320 may be a frequency band and/or channel that can avoid 3-way channel concurrency (or has relatively good communication performance). Accordingly, the first electronic device 310 may activate the autonomous GO mode and transmit and/or receive data through the selected frequency band and/or channel without performing a negotiation process defined in Wi-Fi direct with the second electronic device 320, thereby reducing the delay time because of performing the negotiation process defined in Wi-Fi direct.

The first electronic device 310 may, in operation 840, transmit information indicating a selected frequency band and/or channel to the second electronic device 320.

The first electronic device 310 may transmit information indicating the selected frequency band and/or channel to the second electronic device 320. In an example, the first electronic device 310 may control the first communication circuitry 410 to transmit the information indicating the selected frequency band and/or channel through the first short-range wireless communication. In another example, the first electronic device 310 may control the second communication circuitry 430 to transmit the information indicating the selected frequency band and/or channel through the second short-range wireless communication.

The first electronic device 310 may, in operation 850, perform a connection with the second electronic device 320 through a selected frequency band and/or channel.

The first electronic device 310 may activate the autonomous GO mode before transmitting the information indicating the selected frequency band and/or channel, during transmitting the information indicating the selected frequency band and/or channel, and/or after transmitting the information indicating the selected frequency band and/or channel. The autonomous GO mode may be a mode in which data transmission and/or reception is performed through a frequency band and/or channel configured by a GO (e.g., the first electronic device 310) without a negotiation process between the devices, as a mode in which data transmission and/or reception is performed through a direct connection between devices (e.g., the first electronic device 310 and the second electronic device 320) without going through an AP. The first electronic device 310 may perform a connection with the second electronic device 320 through the second short-range wireless communication while the autonomous GO mode is activated. The first electronic device 310 may transmit data to the second electronic device 320 through a selected frequency band and/or channel, or receive data transmitted by the second electronic device 320 through a selected frequency band and/or channel.

The frequency band and/or channel selected on the basis of the performance information of the second electronic device 320 may be a frequency band and/or channel that can avoid 3-way channel concurrency (or has relatively good communication performance). Accordingly, the first electronic device 310 may activate the autonomous GO mode and transmit and/or receive data through the selected frequency band and/or channel without performing a negotiation process defined in Wi-Fi direct with the second electronic device 320, thereby reducing the delay time because of performing the negotiation process defined in Wi-Fi direct.

An electronic device (e.g., the first electronic device 310 of FIG. 4) according to an embodiment may include a first communication circuitry (e.g., the first communication circuitry 410 of FIG. 4) that transmits and/or receives data with the external electronic device (e.g., the second electronic device 320 of FIG. 3a) through the first short-range wireless communication. The electronic device 310 may include a second communication circuitry (e.g., the second communication circuitry of FIG. 4) that supports simultaneous transmission and reception of signals of different frequency bands of the second short-range wireless communication. The electronic device 310 may include a processor (e.g., the processor 420 of FIG. 4) operatively connected to the first communication circuitry 410 and/or the second communication circuitry 430. The processor 420 may discover an extemal electronic device 320 through the first short-range wireless communication. The processor 420 may receive performance information of the external electronic device 320 related to whether it supports simultaneous transmission and reception of signals of different frequency bands from the external electronic device 320. The processor 420 may select a frequency band and/or channel to be used for connection with the external electronic device 320 through the second short-range wireless communication on the basis of performance information of the external electronic device 320. The processor 420 may transmit information indicating the selected frequency band and/or channel to the external electronic device 320 through the first short-range wireless communication. The processor 420 may be configured to be connected to the external electronic device 320 through the selected frequency band and/or channel.

In an electronic device 310 according to an embodiment, the performance information of the external electronic device 320 may include information indicating whether simultaneous transmission and reception of different frequency bands is supported and/or information indicating a frequency band that supports the simultaneous transmission and reception.

In an electronic device 310 according to an embodiment, the processor 420 may be configured to select a frequency band and/or channel that supports the simultaneous transmission and reception of at least one of the electronic device 310 and the external electronic device 320, as a frequency band and/or channel to be used for connection with the external electronic device 320.

In an electronic device 310 according to an embodiment, the performance information of the external electronic device 320 may include information indicating at least one preferred channel and/or at least one preferred frequency band that the external electronic device 320 may use to transmit data through the second short-range wireless communication.

In an electronic device 310 according to an embodiment, the preferred channel may include a channel connected between the external electronic device 320 and the access point (AP) (e.g., the second AP 333 of FIG. 3a) connected to the external electronic device 320. The preferred frequency band may include a simultaneous support frequency band, which is a frequency band that can simultaneously perform transmission/reception of a signal while performing a signal transmission/reception operation through a frequency band corresponding to the channel connected between the external electronic device 320 and the AP 333. The simultaneous support frequency band may be a different frequency band from the frequency band corresponding to the channel connected between the external electronic device 320 and the AP 333.

In an electronic device 310 according to an embodiment, the processor 420 may be configured to select the channel to be used for connection with the external electronic device 320 on the basis of the frequency band of the channel between the electronic device 310 and the first AP 331, the preferred channel, and the preferred frequency band, in the case that the electronic device 310 is connected to the first AP (e.g., the first AP of FIG. 3a) through the second short-range wireless communication.

In an electronic device 310 according to an embodiment, the processor 420 may be configured to activate an autonomous GO (group owner) mode of the second short-range wireless communication on the basis of the selected frequency band and/or channel.

In an electronic device 310 according to an embodiment, the processor 420 may be configured to be connected to the external electronic device 320 through the second short-range wireless communication without performing a negotiation process of the second short-range wireless communication.

The operation method of the electronic device (e.g., the first electronic device 310 of FIG. 5) may include discovering the external electronic device (e.g., the second electronic device 320 of FIG. 3a) through the first short-range wireless communication. The operation method of the electronic device 310 may include receiving, from the external electronic device 320, performance information of the external electronic device 320 related to whether the external electronic device supports simultaneous transmission and reception of signals of different frequency bands. The operation method of the electronic device 310 may include selecting a frequency band and/or channel to be used for connection with the external electronic device 320 through the second short-range wireless communication on the basis of performance information of the external electronic device 320. The operation method of the electronic device 310 may include transmitting information indicating the selected frequency band and/or channel to the external electronic device 320 through the first short-range wireless communication. The operation method of the electronic device 310 may include connecting with the external electronic device 320 through the selected frequency band and/or channel.

In the operation method of the electronic device 310, the performance information of the external electronic device 320 may include information indicating whether simultaneous transmission and reception of different frequency bands is supported and/or information indicating a frequency band that supports the simultaneous transmission and reception.

In the operation method of the electronic device 310, the operation of selecting a frequency band and/or channel to be used for connection with the external electronic device 320 on the basis of performance information of the external electronic device 320 may include an operation of selecting a frequency band and/or channel that supports simultaneous transmission and reception by at least one of the electronic device 310 and the external electronic device 320 as the frequency band and/or channel to be used for connection with the external electronic device 320.

**In** the operation method of the electronic device 310, the performance information of the external electronic device 320 may include information indicating at least one preferred channel and/or at least one preferred frequency band that the external electronic device 320 can use to transmit data through the second short-range wireless communication.

**In** the operation method of the electronic device 310, the preferred channel may include a channel connected between the external electronic device 320 and the access point (AP) (e.g., the second AP 333 of FIG. 3a) connected to the external electronic device 320. The preferred frequency band may include a simultaneous support frequency band, which is a frequency band that may perform simultaneous transmission/reception of a signal while performing a signal transmission/reception operation through a frequency band corresponding to a channel connected between the external electronic device 320 and the AP 333. The simultaneous support frequency band may be a different frequency band from the frequency band corresponding to the channel connected between the external electronic device 320 and the AP 333.

**In** the operation method of the electronic device 310, the operation of selecting a frequency band and/or channel to be used for connection with the external electronic device 320 on the basis of performance information of the external electronic device 320 may include selecting a channel to be used for connection with the external electronic device 320 on the basis of the frequency band of the channel between the electronic device 310 and the first AP 331, the preferred channel, and the preferred frequency band, in the case that the electronic device 310 is connected to the first AP (e.g., the first AP 331 of FIG. 3a) through the second short-range wireless communication.

The operation method of the electronic device 310 may further include activating an autonomous GO (group owner) mode of the second short-range wireless communication on the basis of the selected frequency band and/or channel.

**In** the operation method of the electronic device 310, connecting with the external electronic device 320 through the second short-range wireless communication through the selected frequency band and/or channel may include connecting with the external electronic device 320 through the second short-range wireless communication without performing a negotiation process of the second short-range wireless communication.

An electronic device (e.g., the second electronic device 320 of FIG. 5) according to an embodiment may include first communication circuitry (e.g., the first communication circuitry 510 of FIG. 5) for transmitting and/or receiving data with an external electronic device (e.g., the first electronic device 310 of FIG. 4) through a first short-range wireless communication. The electronic device 320 may include second communication circuitry (e.g., the second communication circuitry 530 of FIG. 5) supporting simultaneous transmission and reception of signals of different frequency bands of the second short-range wireless communication. The electronic device 320 may include a processor (e.g., the processor 520 of FIG. 5) operatively connected to the first communication circuitry 510 and/or the second communication circuitry 530. The processor 520 may receive a discovery signal transmitted by an external electronic device 310 through the first short-range wireless communication. The processor 520 may transmit performance information of the electronic device 320 related to whether the electronic device supports simultaneous transmission and reception of signals of different frequency bands to the external electronic device 310. The processor 520 may receive, from the external electronic device 310, information indicating a frequency band and/or channel to be used for connection with the external electronic device 310 through the second short-range wireless communication on the basis of performance information of the electronic device 320. The processor 520 may be configured to connect with the external electronic device 310 through the selected frequency band and/or channel.

**In** an electronic device 320 according to an embodiment, the performance information of the electronic device 320 may include information indicating whether simultaneous transmission and reception of different frequency bands is supported and/or information indicating a frequency band that supports simultaneous transmission and reception.

In an electronic device 320 according to an embodiment, the performance information of the electronic device 320 may include information indicating at least one preferred channel and/or at least one preferred frequency band that the electronic device 320 may use to transmit data through the second short-range wireless communication.

In an electronic device 320 according to an embodiment, the processor 520 may be configured to be connected to the external electronic device 310 through the second short-range wireless communication without performing a negotiation process of the second short-range wireless communication.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
first communication circuitry that transmits data to and/or receive data from an external electronic device through the first short-range wireless communication;
second communication circuitry that supports the simultaneous transmission and reception of signals in different frequency bands in the second short-range wireless communication; and
a processor operatively connected to the first communication circuitry and/or the second communication circuitry, wherein
the processor is configured to:
discover an external electronic device through the first short-range wireless communication;
receive, from the external device, performance information of the external electronic device related to whether the simultaneous transmission and reception of signals of different frequency bands is supported;
select, on the basis of performance information of the external electronic device, a frequency band and/or channel to be used for connection with the external electronic device through the second short-range wireless communication;
transmit information indicating the selected frequency band and/or channel to the external electronic device through the first short-range wireless communication; and
connect to the external electronic device through the selected frequency band and/or channel.

2. The electronic device of claim 1, wherein
performance information of the external electronic device comprises information indicating whether simultaneous transmission and reception of different frequency bands is supported and/or information indicating a frequency band supporting the simultaneous transmission and reception.

3. The electronic device of claim 1, wherein
the processor is configured to select a frequency band and/or channel that supports the simultaneous transmission and reception among at least one of the electronic device and the external electronic device as a frequency band and/or channel to be used for connection with the extenral electronic device.

4. The electronic device of claim 1, wherein
performance information of the external electronic device comprises information indicating at least one preferred channel and/or at least one preferred frequency band that the extemal electronic device can use to transmit data through the second short-range wireless communication.

5. The electronic device of claim 4, wherein
the preferred channel comprises a channel connected between the external electronic device and an access point (AP) connected to the external electronic device,
the preferred frequency band comprises a simultaneous support frequency band, which is a frequency band that can simultaneously perform transmission/reception of a signal while performing a transmission/reception operation of a signal through a frequency band corresponding to a channel connected between the external electronic device and the AP, and
the simultaneous support frequency band is a different frequency band from the frequency band corresponding to the channel connected between the external electronic device and the AP.

6. The electronic device of claim 4, wherein
the processor is configured to select a channel to be used for connection with the external electronic device on the basis of a frequency band of a channel between the electronic device and the first AP, the preferred channel, and the preferred frequency band, in the case that the electronic device is connected to the first AP through the second short-range wireless communication.

7. The electronic device of claim 1, wherein
the processor is configured to activate an autonomous GO (group owner) mode of the second short-range wireless communication on the basis of the selected frequency band and/or channel.

8. The electronic device of claim 1, wherein
the processor is configured to be connected through the second short-range wireless communication without performing a negotiation process of the second short-range wireless communication with the external electronic device.

9. A method of an electronic device, the method comprising:
discovering an external electronic device through a first short-range wireless communication;
receiving, from an external electronic device, performance information of the external electronic device related to whether the external electronic device supports simultaneous transmission and reception of signals of different frequency bands;
selecting a frequency band and/or channel to be used for connection with the external electronic device through the second short-range wireless communication on the basis of performance information of the external electronic device;
transmitting information indicating the selected frequency band and/or channel to the external electronic device through the first short-range wireless communication; and
connecting with an external electronic device through the selected frequency band and/or channel.

10. The method of claim 9, wherein
performance information of the external electronic device comprises information indicating whether simultaneous transmission and reception of different frequency bands is supported and/or information indicating a frequency band supporting the simultaneous transmission and reception.

11. The method of claim 9, wherein
selecting a frequency band and/or channel to be used for connection with the external electronic device on the basis of performance information of the external electronic device comprises an operation of at least one of the electronic device and the external electronic device selecting a frequency band and/or channel that supports the simultaneous transmission and reception as a frequency band and/or channel to be used for connection with the external electronic device.

12. The method of claim 9, wherein
performance information of the external electronic device comprises information indicating at least one preferred channel and/or at least one preferred frequency band that the external electronic device can use to transmit data through the second short-range wireless communication.

13. The method of claim 12, wherein
the preferred channel comprises a channel connected between the external electronic device and an access point (AP) connected to the external electronic device,
the preferred frequency band comprises a simultaneous support frequency band, which is a frequency band that can simultaneously perform transmission/reception of a signal while performing a transmission/reception operation of a signal through a frequency band corresponding to a channel connected between the external electronic device and the AP, and
the simultaneous support frequency band is a different frequency band from the frequency band corresponding to the channel connected between the external electronic device and the AP.

14. The method of claim 12, wherein
selecting a frequency band and/or channel to be used for connection with the external electronic device on the basis of performance information of the external electronic device comprise selecting a channel to be used for connection with the external electronic device on the basis of a frequency band of a channel between the electronic device and the first AP, the preferred channel, and the preferred frequency band, in the case that the electronic device is connected to the first AP through the second short-range wireless communication.

15. The method of claim 9, further comprising activating an autonomous GO (group owner) mode of the second short-range wireless communication on the basis of the selected frequency band and/or channel.
